Europäisches Patentamt

European Patent Office

Office européen des brevets

(11) Publication number: **0 274 771 B1**

# EUROPEAN PATENT SPECIFICATION

(45) Date of publication of patent specification: **27.12.91**

(51) Int. Cl.⁵: **G01F 23/28**

(60) Publication number of the earlier application in accordance with Art.76 EPC: **0 168 404**

(21) Application number: **87202271.0**

(22) Date of filing: **07.05.84**

(54) Liquid level sensor.

(30) Priority: **20.01.84 US 572734**

(43) Date of publication of application:
**20.07.88 Bulletin 88/29**

(45) Publication of the grant of the patent:
**27.12.91 Bulletin 91/52**

(84) Designated Contracting States:
**BE CH DE FR GB LI**

(56) References cited:
**EP-A- 0 078 939**
**DE-A- 2 611 729**
**DE-A- 3 012 328**
**US-A- 4 240 747**
**US-A- 4 287 427**

(73) Proprietor: **Hughes Aircraft Company**
**7200 Hughes Terrace P.O. Box 45066**
**Los Angeles, California 90045-0066(US)**

(72) Inventor: **Pikulski, Joseph L.**
**1800 W. Hillcrest Drive, 247**
**Newberry Park California 91320(US)**

(74) Representative: **Colgan, Stephen James et al**
**CARPMAELS & RANSFORD 43 Bloomsbury Square**
**London WC1A 2RA(GB)**

**Description**

BACKGROUND OF THE INVENTION

Optical fiber has electro-deposited thereon a metal body which permits the fiber to be mechanically acted upon by machining, positioning, or handling the metal body.

Fiber optic waveguides are small and fragile. It is important that the waveguides be firmly supported at least at their ends so that they can be ground and polished with facets or other surfaces which are optimum for coupling light into the fiber or for coupling the fiber with respect to another optical structure such as another optical fiber, a detector, or an integrated optic waveguide. In the past, epoxy adhesive has been employed for attaching a fiber optic waveguide to a surface for the purpose of building a coupling device for the end of the fiber, including polishing of the fiber end. One of the problems of this attachment is that the dimensional changes in the hardening epoxy adhesive cause external forces on the fiber optic waveguide. These forces cause microbending in the optical fiber resulting in significant signal losses. Microbending, localized changes in the optical fiber's index of refraction, must be minimized in order to maximize the signal and the signal-to-noise ratio. Thus, there is need for a structure which can be built up onto an optical fiber to permit handling of the optical fiber and to permit machining and otherwise processing the end of the optical fiber to enhance coupling and the like.

US-A-4287427 discloses an apparatus for detecting the level of a liquid in a container by modulating the intensity of light propagating through a fiber-optic light guide. A section of the guide has the cladding removed or partially removed so that the surrounding medium can greatly affect the guide's transmission properties.

US-A-4240747 discloses a device for producing a light signal corresponding to the refractive index of a fluid medium. The device comprises an elongated light-conducting body consisting of an input section and an output section connected to each other by an intermediate curved section, adapted for immersion in the fluid.

DE-A-3012328 discloses a fiber optical measuring device for measurement of physical parameters of a medium, for instance its level. The device has a light guide which is immersed in the medium. The core of the light guide has a higher refractive index than the medium and the coating is removed or very thin in the immersed region, so that when the guide is immersed, light is transmitted from the core.

According to the invention, there is provided a liquid level sensor comprising: a cylinder; an optical fiber having a source end and a detector end, said optical fiber being wrapped in a plurality of turns around said cylinder, said source end being for connection to a light source and said detector end being for connection to a light detector; said optical fiber having an optical cladding; characterised by: a body, which is strong and rigid enough to permit machining and other handling of the fiber deposited on the fiber-wrapped cylinder to hold the fiber rigidly in place; said body having a sensor face wherein a portion of said body is removed and the cladding on said fiber is exposed at said sensor face so that as the exposed portions of cladding are successively immersed in liquid, the amount of light passing out to the detector end is decreased; and said cylinder being a mandrel.

In order to aid in the understanding of this invention, it can be stated in essentially summary form that it is directed to a fiber optic structure and the method of making the fiber optic structure. The fiber optic structure comprises the depositing upon the exterior of the fiber a body of material which is sufficiently strong and rigid to permit machining and other handling of the fiber. The body of material should have a thermal coefficient of expansion substantially the same as that of the fiber optic material to minimize microbending and consequent microbending losses upon temperature change.

It is a purpose and advantage of this invention to provide a method of depositing a body on the exterior of a fiber optic waveguide in order to permit handling, machining, and connecting of the waveguide to other optical parts.

It is a further purpose and advantage of this invention to provide a metallic body deposited on a fiber optical waveguide in such a manner that the body minimizes microbending losses and permits machining and attachment of the fiber optic for optical interconnection therewith.

Other purposes and advantages of this invention will become apparent from a study of the following portion of the specification, the claims, and the attached drawings.

FIG. 1 is a perspective view of an optical fiber onto which a metallic body will be built up in accordance with the structure and method of this invention.

FIG. 2 is a perspective view of the same optical fiber of FIG. 1, showing a metal body built up thereon.

FIG. 3 is a side-elevational view, with parts broken away and parts taken in section of a liquid level sensor in accordance with this invention.

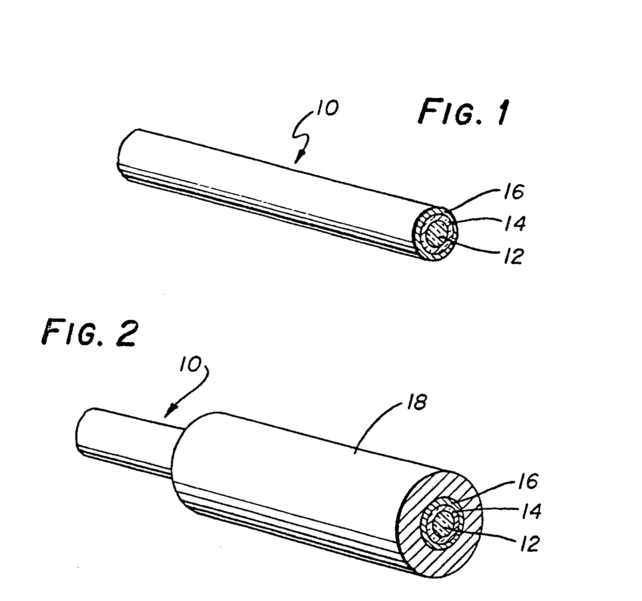

In FIG. 1, optical fiber 10 is the general indication of a typical coated optical fiber. Fiber core 12 is substantially transparent to the optical radiation of interest. It preferably carries an optical cladding 14 and a coating 16. Coating 16 can be either an organic material or an inorganic material such as aluminum. Such optical fibers can be made sufficiently flexible and optically transmissive to achieve the results required of optical fibers.

Referring to FIG. 2, copper body 18 is a built-up structure on coating 16 of fiber 10 when cladding is of an inorganic material such as aluminum. Alternatively, copper body 18 is a built-up structure on optical cladding 14 when coating 16 is of an organic material, coating 16 being removed therefrom prior to beginning of the build-up process.

When the optical cladding 14 is the exterior or material of the fiber, the length on which the body 18 is to be deposited can be made conductive by vapor deposition of silver or gold as a first step. Copper is particularly suited for the built-up structural body because it can be evenly and easily deposited upon the fiber. An even, localized-force-free deposition process eliminates localized forces which can cause microbending and consequent transmission losses. Other metals would be selected for the built-up structural body when found to be suitable for this even, localized-force-free deposition.

Copper body 18 is built up by electroplating. A suitable electroplating bath is prepared as follows: Two hundred and twenty-five grams of copper sulphate are dissolved per liter of water. Fifty-five grams of sulfuric acid are also added per liter to provide the copper plating electrolyte. Added to the plating electrolyte solution is one-half milliliter of UBAC solution No. 1 per liter of electrolyte. This material is available from Udylite-Omic, 21441 Hoover Road, Warren, Michigan 48089. This mixture acts to improve the fineness of the copper grain in the electrolytic build up. In the alternative, blackstrap molasses is also useful for the purpose of improving the fineness of the copper grain.

It is critical to the plating that the plating current be a maximum of 180 milliamperes per square inch (279 A/m$^2$). A higher current accelerates the ions in the plating solution and this, in turn, produces random orientation which results in graininess. Currents lower than the maximum current improve the fineness of the copper grain. The preferred current is 90 milliamperes per square inch (140 A/m$^2$). The plating voltage is from 0 to 3 volts, and the electrolyte temperature is maintained at 70 to 80 degrees F (21.1 to 26.7° C). The concentration of UBAC solution No. 1 in the electrolyte is maintained during the plating operation.

The plating operation must be carefully performed to minimize stresses in the copper plate body which would cause microbending. Microbending, localized changes in the optical fiber's index of refracting, is caused by forces applied to fiber 10. Copper body 18 is thereby deposited without substantial effect upon fiber 10. The result is that the copper body 18 produces a transmission loss of less than 0.01 decibels in the fiber. Plating continues until the copper body 18 is built up to the desired size.

The built-up structural body is useful for creating structures of various utility and for use of the fiber 10 in various different applications.

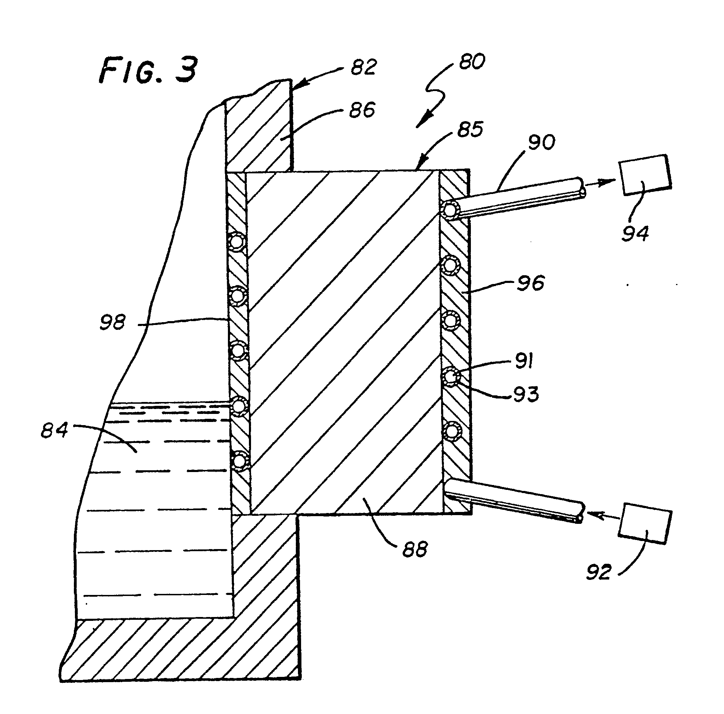

FIG. 3 illustrates a liquid level sensing system 80. Vessel 82 has at least side walls and a bottom for retaining liquid 84. Liquid level sensor 85 is built into wall 86 of vessel 82. Mandrel 88 has optical fiber 90 wrapped spirally around it as a continuous fiber. Connected to opposite ends of optical fiber 90 are light source 92, which may be a light-emitting diode, and light detector 94. Optical fiber 90 is wrapped around mandrel 88 with a spacing between two adjacent fibers being the smallest increment in liquid level to be detected. This optical fiber-wrapped-mandrel assembly is then coated with a body of material 96 to bury fiber 90 and rigidly hold it in place. The choice of a coating material depends on the harshness of the environment to which liquid level sensing system 80 will be exposed. In accordance with this invention, it is preferred that the body of material 96 be built up by electroplating, the same way as previously described for body 18. Copper is a suitable material for some environments, or other materials which can be plated can be employed as body 96. Once the fiber has been protected by body 96, sensor side 98 is ground and polished so that optical cladding 93 of optical fiber 90 is exposed and fiber core 91 is fairly close to, but below the polished surface of sensor side 98. After the cladding is exposed by polishing, liquid level sensor 85 is placed in the side of vessel 82, as indicated in FIG. 3.

In liquid level sensing system 80 of FIG. 3, optical fiber 90 is composed of core 91 covered by optical cladding 93. The fiber core is of any conventional core material, such as quartz glass, and the cladding is a glass cladding which reflects light back into the core. Thus, some of the light passes through the cladding, and this light will be stripped away where liquid comes into contact with the polished cladding.

The liquid level sensing system of FIG. 3 has a restriction on the diameter of mandrel 88. The diameter of mandrel 88 must be chosen so that it is large enough to prevent the rapid loss of optical power in the first few turns of optical fiber 90 around mandrel 88 with a small diameter mandrel, light is radiated into the optical cladding 93 of the first few turns of fiber 90 resulting in the optical power loss. With large diameter mandrels and high numerical aperture fibers, the problem is minimized. When a smaller mandrel diameter is used, a higher numerical aperture is required in the fiber to minimize the radiation loss. As the mandrel diameter increases, the requirement of a higher numerical aperture decreases. As a general rule, the numerical aperture is inversely proportional to the mandrel diameter.

As a specific example, with a mandrel of 25.4cm (10 inches) in diameter, an optical fiber with a fifteen micron core and glass cladding and having a length of 1.83 metres (6 feet) be wound around the mandrel with four exposed turns on the sensor side 98. For such purpose, an optical fiber having a numerical aperture of 0.2 was used. Using a helium-neon laser and a silicon detector, when none of the exposed cladding portions on the sensor side 98 are immersed in water, the signal arriving at detector 94 would be about 90 percent of the light emitted by source 92.

As the light from the core is radiated into the cladding, there is a substantial amount of power which can be mode-stripped from cladding 93 when adjacent the liquid. The drop in the optical power of detector 94 represents the liquid level. Liquid 84, monitored in vessel 82, is the mode-stripper. As liquid 84 rises in the vessel, it reduces the light detected at detector 94 by about 3 percent for each of the exposed portions of cladding 93 which is covered by liquid 84. In between each loop a bend is introduced to radiate more light into cladding 93. Since only one detector is employed in response to five different liquid levels in the example illustrated, liquid level sensing system 80 can be considered a quasianalog system. Closer spacing of the turns provides for detection of smaller increments in liquid level height and more turns provides for a greater range in detection.

This invention has been described in its presently contemplated best mode, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A liquid level sensor (80) comprising:
   a cylinder (88);
   an optical fiber (90) having a source end and a detector end, said optical fiber being wrapped in a plurality of turns around said cylinder, said source end being for connection to a light source (92) and said detector end being for connection to a light detector (94);
   said optical fiber having an optical cladding (93);
   said sensor (80) characterised by: a body 96, which is strong and rigid enough to permit machining and other handling of the fiber deposited on the fiber-wrapped cylinder to hold the fiber rigidly in place;
   said body having a sensor face wherein a portion (98) of said body is removed and the cladding (93) on said fiber is exposed at said sensor face so that as the exposed portions of cladding are successively immersed in liquid, the amount of light passing out to the detector end is decreased; and
   said cylinder (88) being a mandrel.

2. The sensor of claim 1 wherein a light source (92) is connected to said source end and a light detector (94) is connected to said detector end of said fiber.

3. The sensor of claim 1 or claim 2, wherein at least a portion of said body is positioned within a tank so that as liquid (84) rises in said tank, said exposed cladding portions are successively covered to reduce light output at the detector end of said fiber.

4. The sensor of any one of claims 1 to 3, in which the material of the body has a thermal coefficient of expansion substantially the same as the material of the optical fiber.

## Revendications

1. Capteur de niveau de liquide (80) comprenant :
   un cylindre (88) ;
   une fibre optique (90) ayant une extrémité source et une extrémité détecteur, la fibre optique étant enroulée sur plusieurs tours autour du cylindre, l'extrémité source pouvant être reliée à une source de lumière (92) et l'extrémité détecteur pouvant être reliée à un détecteur de lumière (94) ;
   la fibre optique comportant une gaine optique ;
   le capteur (80) étant caractérisé par un corps (96), suffisamment résistant et rigide pour permettre un usinage ou d'autres traitements de la fibre, déposé sur le cylindre avec la fibre enroulée pour maintenir la fibre rigidement en place ;
   ce corps comportant une face de capteur, une partie (98) du corps étant enlevée et la gaine (93) de la fibre étant exposée sur ladite face de capteur de façon que, lorsque les parties exposées de la gaine sont successivement immergées dans un liquide, la quantité de lumière parvenant à l'extrémité détecteur diminue ; et
   ledit cylindre (88) étant un mandrin.

2. Capteur selon la revendication 1, dans lequel une source de lumière (92) est reliée à l'extrémité source et un détecteur de lumière (94) est relié à l'extrémité détecteur de la fibre.

3. Capteur selon l'une des revendications 1 ou 2, dans lequel une partie au moins dudit corps est placée dans un réservoir de façon que, lorsque du liquide (84) monte dans le réservoir, les parties exposées de la gaine sont successivement recouvertes, réduisant ainsi la quantité de lumière qui parvient à l'extrémité détecteur de la fibre.

4. Capteur selon l'une des revendications 1 à 3, dans lequel le matériau constituant le corps a un coefficient de dilatation thermique sensiblement identique à celui du matériau constituant la fibre optique.

## Patentansprüche

1. Ein Flüssigkeitstandsensor (80) beinhaltend:

einen Zylinder (88);

eine optische Faser (90) mit einem Lichtquellenende und einem Detektorende, wobei sich die optische Faser in einer Vielzahl von Windungen um den Zylinder herumwickelt, das Lichtquellenende zur Verbindung mit einer Lichtquelle (92) und das Detektorende zur Verbindung mit einem Lichtdetektor (94) dient, die optische Faser eine optische Umhüllung (93) aufweist und

der Sensor (80) durch einen Körper (96) gekennzeichnet ist,

der ausreichend stabil und starr und um den Faser-umwickelten Zylinder herum angeordnet ist, um die Faser maschinell und andersweitig behandeln und starr fixieren zu können;

wobei der Körper eine Sensorseite aufweist, die so ausgestaltet ist, daß ein Teil (98) des Körpers entfernt ist und die Umhüllung (93) der Faser auf der Sensorseite frei liegt, so daß die Lichtmenge, die das Detektorende erreicht, abnimmt, wenn die frei liegenden Teile der Umhüllung in eine Flüssigkeit eintauchen; und

wobei der Zylinder (88) dornförmig ist.

2. Sensor nach Anspruch 1, dadurch gekennzeichnet, daß eine Lichtquelle (92) mit dem Lichtquellenende der Faser und ein Lichtdetektor (94) mit dem Detektorende der Faser verbunden ist.

3. Sensor nach Anspruch 1 oder 2, dadurch gekennzeichnet, daß sich wenigstens ein Teil des Körpers innerhalb eines Behälters befindet, so daß, wenn der Flüssigkeitsspiegel im Behälter steigt, die frei liegenden Teile der Umhüllung mit Flüssigkeit (84) bedeckt sind, um die Lichtmenge am Detektorende der Faser zu verringern.

4. Sensor nach wenigstens einem der Ansprüche 1 bis 3, dadurch gekennzeichnet, daß das Material des Körpers einen Wärmeausdehnungskoeffizienten aufweist, der im wesentlichen dem des Materials der optischen Faser entspricht.

*FIG. 1*

10

16
14
12

*FIG. 2*

10

18

16
14
12

FIG. 3